**Europäisches Patentamt**

**European Patent Office**

**Office européen des brevets**

(11) Veröffentlichungsnummer: **0 493 624 B1**

(12) ## EUROPÄISCHE PATENTSCHRIFT

(45) Veröffentlichungstag der Patentschrift: **22.06.94**

(51) Int. Cl.⁵: **H05B 6/66**, H02M 3/28, G01S 7/00

(21) Anmeldenummer: **90124879.9**

(22) Anmeldetag: **20.12.90**

(54) **Zum Betreiben eines Magnetrons bestimmtes Schaltnetzteil.**

(43) Veröffentlichungstag der Anmeldung:
**08.07.92 Patentblatt 92/28**

(45) Bekanntmachung des Hinweises auf die Patenterteilung:
**22.06.94 Patentblatt 94/25**

(84) Benannte Vertragsstaaten:
**DE FR GB IT**

(56) Entgegenhaltungen:
**EP-A- 0 301 805**
**EP-A- 0 401 697**
**US-A- 4 933 830**

**18th Annual IEEE Power Electronics Specialists Conference 1987, Blacksburg, Virginia, USA, & M. Schlecht: "A High Frequency, Low Volume, Point-of-Load Power Supply for Distributed Power Systems"**

**PROCEEDINGS OF THE IEEE. vol. 76, no. 4, April 1988, NEW YORK US & Schlecht: "High-Frequency High-Density Converters for Distributed Power Supply Systems"**

(73) Patentinhaber: **VOGT electronic Aktiengesellschaft**
**Erlau,**
**Postfach 10 01**
**D-94128 Obernzell(DE)**

(72) Erfinder: **Hartmann, Uwe,**
**Passauer Strasse 49**
**W-8391 Untergriesbach(DE)**
Erfinder: **Mai, Udo,**
**O.-Berneder Ring 7**
**W-8391 Untergriesbach(DE)**

(74) Vertreter: **Hieke, Kurt**
**Stadlerstrasse 3**
**D-85540 Haar (DE)**

## Beschreibung

Die Erfindung bezieht sich auf ein Schaltnetzteil gemäß dem Oberbegriff des Patentanspruchs 1.

Die Obergrenze der Leistungsabgabe in Mikrowellenöfen liegt z.Zt. bei etwa 800 W. Es besteht der Wunsch, diesen Wert noch weiter nach oben zu verschieben. So gibt es neue Magnetrons, die eine maximale Leistungsabgabe von 1 kW erreichen.

Diese hohe Leistung wird nicht ständig benötigt. Es muß möglich sein, die Abgabeleistung auf niedrigere Werte herabsetzen zu können, insbesondere auch auf Werte, wie sie z.B. bei Mikrowellenöfen mit einer maximalen Leistung von 500 W leicht durch eine Zweipunktregelung erreichbar sind. Es sind daher Maßnahmen zu treffen, die es gestatten, die Abgabeleistung auch bei Einsatz der neuen Magnetrons auf diese Werte herabsetzen zu können.

Aufgrund der sogenannten Flickervorschrift (EN 60555) für das öffentliche Versorgungsnetz scheidet eine Abwärtsregelung nach dem Prinzip der Zweipunktregelung für die neuen Magnetrons praktisch aus. Gemäß dieser Vorschrift darf die Einschaltzeit eines Verbrauchers mit 2 kW (Magnetrons haben einen Wirkungsgrad von ca. 50 %) Leistungsaufnahme nicht unter zwanzig Sekunden liegen. Würde man nach dieser Methode z.B. eine Abgabeleistung von maximal 1 kW auf 50 W reduzieren wollen, bestünde eine Dosierungsperiode aus einer Zeit von 380 Sekunden "aus" und 20 Sekunden "ein". Innerhalb dieser Gesamt-Zeitspanne von 400 Sekunden wäre das Gargut zwanzig Sekunden lang unmittelbar 1 kW ausgesetzt. Dieses Beispiel zeigt deutlich, daß die Zweipunktregelung für große Leistungen im Mikrowellenofen - anders als bei der Kochplatte, die eine Zwischenspeicherfunktion erfüllt - eine unbrauchbare Lösung darstellt.

Mit einem Schaltnetzteil herkömmlicher Bauart ließe sich die Leistungsaufnahme zwar kontinuierlich herabsetzen. Die Art dieser Leistungsminderung hat jedoch zwei Nachteile:

1. Es müßte für die Heizung, die bekanntlich auf Hochspannungspotential liegt, ein zusätzliches Netzteil mit Trennung z.B. nach VDE geschaffen werden.
2. Der Wirkungsgrad des Magnetrons bei geringen Strömen würde weiter abnehmen.

Eine weitere bekannte Möglichkeit der Leistungsreduzierung bei einer Mikrowellen-Maximalleistung von 1 kW ist eine Lösung mit zwei Netzteilen und zwei Magnetrons von 500 W in ein- und demselben Gerät. In diesem Falle muß zur Leistungsreduzierung bei einer Zweipunktregelung nur 1 kW geschaltet werden. Bei dieser Leistung läßt der Gesetzgeber eine minimale Einschaltzeit von nur 1 Sekunde zu.

Das oben aufgeführte Beispiel für die Herabsetzung einer maximalen Leistungsabgabe von 1 kW auf 50 W sähe wesentlich besser aus. Eine Dosierungsperiode bestünde aus 10 Sekunden, davon wäre das Gargut nur eine Sekunde der halben maximalen Mikrowellenleistung, nämlich 500 W, ausgesetzt. Dieses Beispiel zeigt, daß eine Zweipunktregelung in diesem Falle geeignet ist. Störend bei diesem Konzept ist allerdings der Aufwand (zwei Magnetrons und zwei komplette Netzteile).

Der Erfindung liegt die Aufgabe zugrunde, ein Schaltnetzteil zu schaffen, das es ermöglicht, die Regulierung der Leistungsabgabe an das Gargut aus dem letztgenannten Beispiel verwenden zu können, ohne daß zwei getrennte Netzteile und zwei Magnetrons eingesetzt werden müssen.

Die vorstehende Aufgabe wird durch die Merkmale des Patentanspruchs 1 gelöst.

Das erfindungsgemäße Schaltnetzteil entspricht dem bekannten Schaltnetzteil gemäß DE-A-39 15 540.4 (≙ EP-A-0 397 176) insofern, als bei ihm für die impulsförmige Stromauskopplung zum Magnetron zwei Klemmschaltungen mit je einem eigenen zugehörigen Transformator vorgesehen sind, die so gepolt sind, daß bei gemeinsamem Betrieb beider Klemmschaltungen in der Durchflußphasenzeit die eine Klemmschaltung den zugehörigen Klemmkondensator auflädt, während die andere Klemmschaltung die Energie an das Magnetron abgibt, und dann in der darauffolgenden Sperrphasenzeit die vorgenannte eine Klemmschaltung Energie in das Magnetron abgibt, während die andere Klemmschaltung den zugehörigen Klemmkondensator auflädt. Bei dem bekannten Schaltnetzteil wird mit dieser Maßnahme die Aufgabe gelöst, unter Berücksichtigung der Oberwellenvorschriften (VDE 0838 bzw. EN 60555, Teil 2 und 3) den für große Ausgangsleistungen erforderlichen Strom von 350 mA (analytischer Mittelwert) durch unipolare Stromimpulse mit einem zulässigen Spitzenwert von 1,2 A zu erreichen. Durch eine zeitlich verschachtelte Gegentaktklemmung ist es dort gelungen, die bei einem reinen Sperrwandlernetzteil üblichen Pausenzeiten zwischen zwei Strompulsen zu halbieren.

Bei der Erfindung wird diese für sich zu einem anderen Zweck bekannte Maßnahme in Kombination mit zwei weiteren, neuartigen Maßnahmen zur Lösung eines anderen Problems, nämlich zur Lösung des Aufgabe der Leistungsminderung bei den neuen Magnetrons hoher Leistung, angewendet. Diese beiden weiteren, neuartigen Maßnahmen bestehen darin, daß das Schaltnetzteil mit zwei Endstufen mit je einem eigenen elektronischen Schalter versehen ist, von denen die eine den einen Transformator mit zugehöriger Klemmschaltung und die andere den anderen Transformator mit zugehöriger Klemmschaltung umfaßt, und daß die beiden Endstufen zur Dosierung der an das Magnetron abgegebenen Leistung unabhängig voneinander ein- und abschaltbar sind.

Bei dem erfindungsgemäßen Schaltnetzteil kann zur Erzielung einer bestimmten Leistungsabgabe an das Gargut die verschachtelte Klemmung je nach Bedarf ganz abgeschaltet oder nach dem Prinzip der Zweipunktregelung periodisch unterbrochen werden, und es ist auch möglich, die nach ganzer Abschaltung der verschachtelten Klemmung verbleibende einfache Klemmung nach dem Prinzip der Zweipunktregelung periodisch zu unterbrechen. Durch das Abschalten oder Unterbrechen der verschachtelten Klemmung wird die Leistung, die das Schaltnetzteil in der Betriebsphase an das Magnetron abgibt, von 100 % auf 50 % reduziert. Damit ist es möglich, die Leistungsabgabe an das Gargut zwischen 100 % und 50 % der maximal verfügbaren Leistung abzuregeln. Für den Rest der Abwärtsregelung (50-5 % der maximalen Leistung) wird das Schaltnetzteil bei gänzlich abgeschalteter verschachtelter Klemmung mit der verbliebenen einfachen Klemmung nach dem Zweipunktregelverfahren betrieben. Auf diese Weise ist auch für Magnetrons der neuen Generation von höherer Maximalleistung eine quasikontinuierliche Leistungsregelung oder -steuerung mit nur einem Schaltnetzteil ermöglicht worden.

Wie in der oben genannten DE-OS erwähnt, ist es durchaus wirtschaftlich, anstelle eines großen Schaltnetztransformators zwei kleine Transformatoren zu verwenden. Dies gilt insbesondere bei sehr großen Leistungen, die es auch im vorliegenden Falle zu berücksichtigen gilt.

Die Unteransprüche haben bevorzugte Ausgestaltungen des Schaltnetzteils gemäß Patentanspruch 1 zum Gegenstand.

Die Erfindung wird nachstehend anhand der Zeichnung an einem Ausführungsbeispiel noch näher erläutert.

Bild 1 der Zeichnung zeigt das Gesamtschaltbild einer bevorzugten Ausführungsform des erfindungsgemäßen Schaltnetzteils.

In den Bildern 2a und 2b der Zeichnung sind schematisch die Funktionen des Auskoppelkreises für die Betriebsarten Sperrwandler bzw. Durchflußwandler veranschaulicht.

Die Bilder 3 a bis 3 l der Zeichnung geben Aufschluß über Strom- und Spannungsverhältnisse beim Schaltnetzteil gemäß Bild 1.

Das Schaltnetzteil gemäß Bild 1 weist zwei Transformatoren TR, TR' auf. Die primärseitigen, nachstehend als Energiespeicherspulen bezeichneten Spulen LP, LP' dieser Transformatoren TR, TR' sind an einem Ende mit der einen Gleichspannungsklemme einer Netzgleichrichterbrücke NG verbunden und mit dem anderen Ende jeweils über einen elektronischen Schalter in Form eines Schalttransistors T1 bzw. T1' an die andere, auf Massepotential des Schaltnetzteils gelegte Gleichspannungsklemme dieses Gleichrichters NG angeschlossen. Zwischen die Gleichspannungsklemmen des Gleichrichters NG ist ein Ladekondensator CL geschaltet.

Die Basis der Schalttransistoren T1, T1' ist jeweils an den Ausgang einer zugehörigen Treiberstufe TS bzw. TS' angeschlossen. Die Treiberstufen TS, TS' werden eingangsseitig von einer gemeinsamen Ansteuerschaltung AS gesteuert und sind unabhängig voneinander von einem nicht dargestellten Bedienteil des Mikrowellenofens her über einen zugehörigen Optokoppler O bzw. O' ein- und ausschaltbar.

Auf der Sekundärseite sind die Transformatoren TR, TR' jeweils mit einer Hochspannungsspule LH bzw. LH' versehen, die über eine zugehörige Klemmschaltung KL bzw. KL' mit dem Magnetron M verbunden ist.

Die Treiberstufe TS, der Schalttransistor T1 der Transformator TR mit seinen Spulen LP und LH und die Klemmschaltung KL bilden eine (E) von zwei Endstufen E, E', deren andere (E') aus den entsprechenden anderen Schaltungsteilen TS', T1', TR' (mit LP' und LH') und KL' besteht. Diese Endstufen E, E' sind durch Einwirkung auf die Treiberstufen TS und TS' vom Bedienteil her über die Optokoppler O, O' unabhängig voneinander ein- und ausschaltbar.

Wenn unter der Steuerung durch das Bedienteil beide Endstufen E, E' gleichzeitig in Betrieb sind, werden die Schalttransistoren T1, T1' von der Ansteuerschaltung AS synchron ein- und ausgeschaltet. Die Endstufen E, E' arbeiten dabei stromkontrolliert im Sperrwandler-, Durchflußwandler- und Paketbetrieb in solcher Weise zusammen, daß sich für das Schaltnetzteil die in der EP 397 176 A2 offenbarte Betriebsweise ergibt. Die für die impulsförmige Stromauskopplung zum Magnetron M vorgesehenen beiden Klemmschaltungen KL, KL' sind in Abstimmung auf die zugehörigen Transformatoren TR, TR' hierfür so gepolt, daß in der Durchflußphasenzeit die eine, die Dioden DK1 und DM1 sowie dem Klemmkondensator CK1 umfassende Klemmschaltung KL den zugehörigen Klemmkondensator CK1 auflädt, während die andere, die Dioden DK2 und DM2 sowie den Klemmkondensator CK2 umfassende Klemmschaltung die Energie an das Magnetron M abgibt, und dann in der darauffolgenden Sperrphasenzeit die Klemmschaltung KL Energie an das Magnetron abgibt, während die Klemmschaltung KL' den zugehörigen Klemmkondensator CK2 auflädt. Dabei ist die Freilaufzeit durch die jeweils aus der Speicherspule LP bzw. LP' und einem jeweils dazu parallel geschalteten Kondensator CF1 bzw. CF2' bestehenden Resonanzkreise abgestimmt. Die Freilauffrequenz ist etwa 42 kHz, d. h. die Freilaufzeit beträgt ca. 12 $\mu$s (Halbsinus, Bilder 3g und 3i). Die Kollektorspannung der beiden Schalttransistoren T1, T1' ist auf etwa 800 V konstant gehalten.

Die Leitzeit der Schalttransistoren T1 und T1' ist abhängig von der Netz- und Netzaugenblicksspannung unterschiedlich (Bilder 3g und 3h, etwa 42 $\mu$s bei 70 V und 8 $\mu$ bei 370 V). Durch den Currentmode-Betrieb wird erreicht, daß am Ende der Leitzeit eine immer etwa gleich große Energie in den Speicherspulen LP, LP' vorhanden ist.

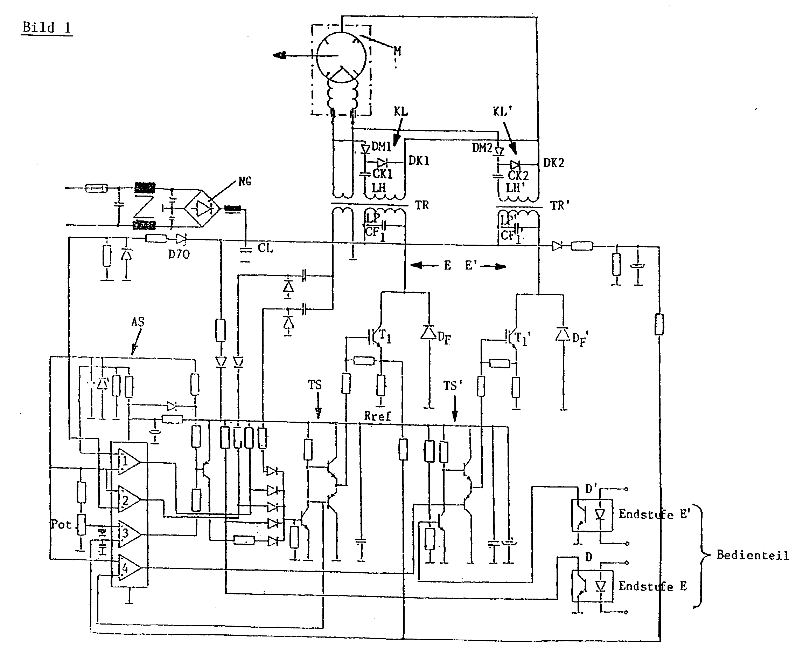

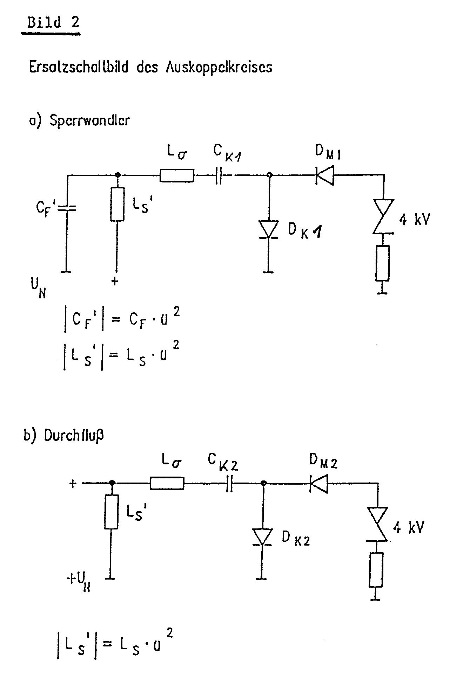

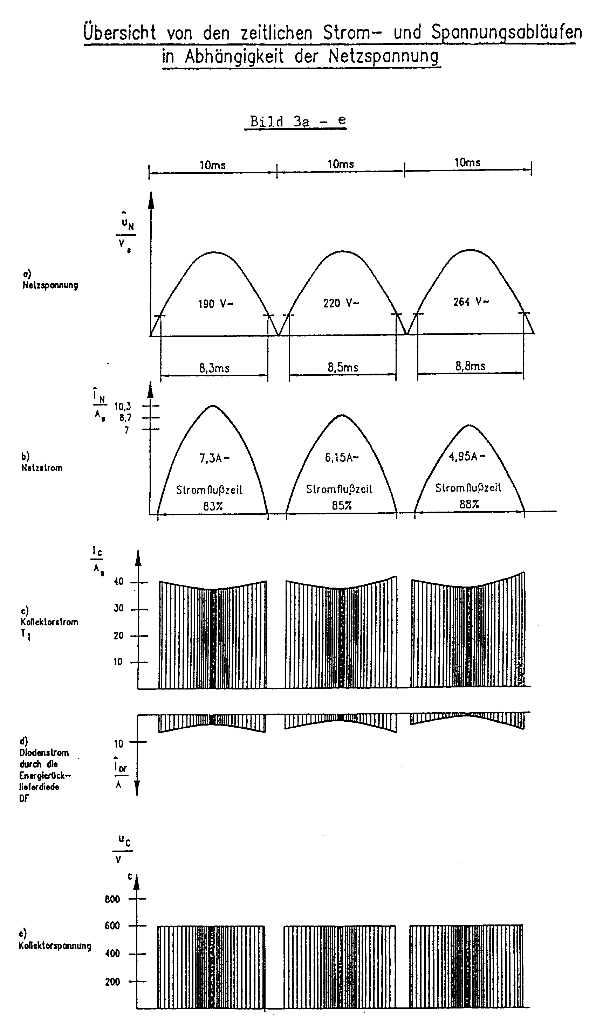

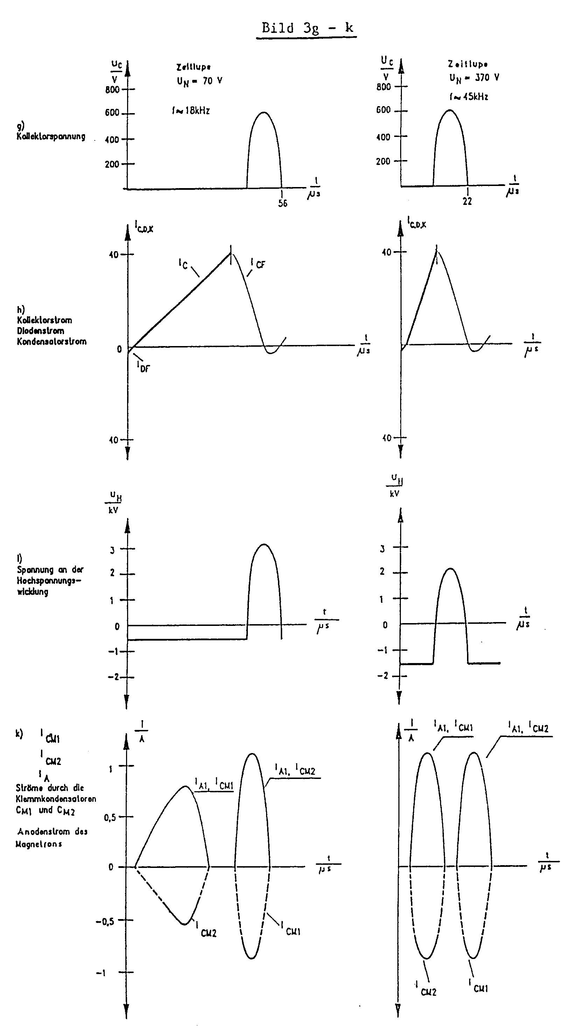

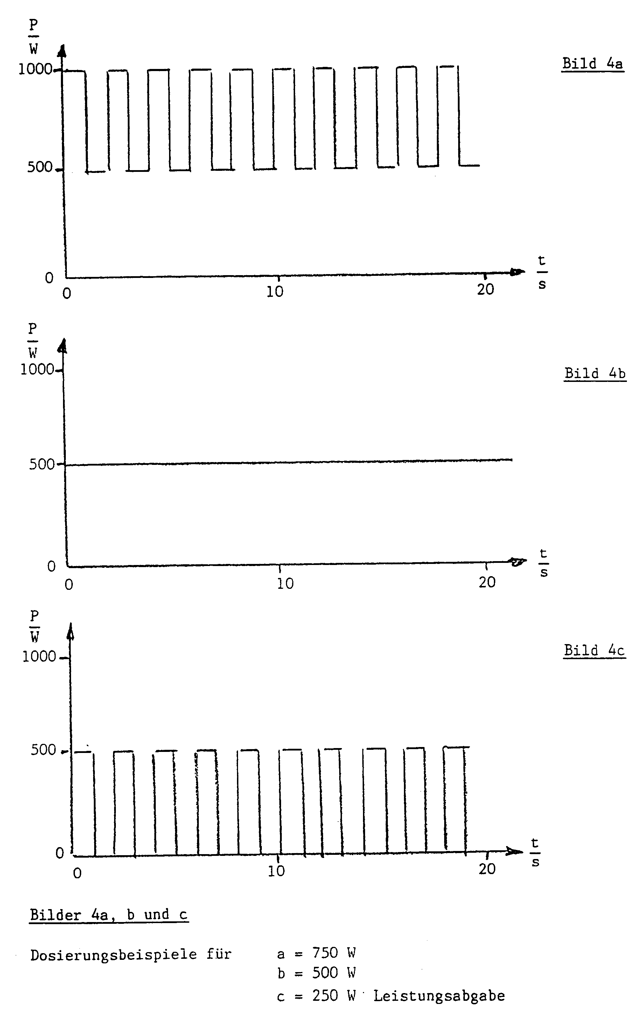

Liegt die Netzaugenblicksspannung unterhalb 70 V, sind die Endstufen E,E' außer Betrieb (Bilder 3a, b und c). Als Pakete sind die Kollektorströme und -spannungen der Schalttransistoren sowie die Ströme durch die zu diesen parallelen Dioden DF und DF' in den Abbildungen 3c, d und e wiedergegeben. Die Paketbreite wird im Betrieb mit maximaler Leistung nur durch die Netzspannung etwas beeinflußt. Im Vorheizbetrieb kann sie zusätzlich zur Vermeidung unzulässig hoher Heizströme durch das Einführen einer freilaufspannungsabhängigen Rampenspannung , die ab einer vorgegebenen Schwelle ein Abschalten bewirkt, begrenzt werden.

Im Normalbetrieb sind die Schalttransistoren T1, T1' immer abgeschaltet (Treibereingänge high):
- wenn die augenblickliche Netzspannung am Ladekondensator CL ≤ 70 V beträgt. (Funktion: D70, Komparator 2)
- wenn die Treiberspannung ≤ 10 V ist. (Funktion: Komparator 1).
- wenn die Spannung am Referenzwiderstand Rref ≥ der Referenzspannung (Abgriff beim Potentiometer Pot) ist, und während der Flyback-Phase. (Funktion: Komparator 3)

Die Frequenz ist abhängig von der Netzaugenblicksspannung und der Funktion Normal- oder Vorheizbetrieb. Eine Periode besteht aus den Zeiten: Einschaltzeit tE, Freilaufzeit tF und Stromzeit tDF durch die Energierücklieferdiode DF bzw. DF'.

Die Einschaltzeit tE ist nur von der augenblicklichen Netzspannung abhängig und variiert, wie erwähnt, zwischen 8 $\mu$s und 42 $\mu$s.

Die Freilaufzeit tF ist konstant auf 12 $\mu$s abgestimmt.

Die Stromlaufzeit tDF der Dioden DF bzw. DF' ist abhängig von der Last. Im Falle der Vorheizperiode wird fast die gesamte gespeicherte Energie in CL zurückgeliefert. Des halb ist die Zeit tDF in dieser Phase fast gleich der Zeit tE. Im Normalbetrieb ist nur ein kleiner Rest von der gespeicherten Energie übrig (Bilder 3g, 3h), da fast die gesamte Energie dem Magnetron M abgegeben wird. Die Stromlaufzeit tDF beträgt dann nur etwa 3 $\mu$s.

Die Gesamtperiodenzeit des Normalbetriebes (tE + tF + tDF) schwankt zwischen 22 $\mu$s und 56 $\mu$s. Das entspricht einer Frequenz von 45 kHz bis 18 kHz. Im Vorheizbetrieb liegt die Frequenz zwischen 12 kHz und 38 kHz.

Die Stromspeisung des Magnetrons M:

Wegen seiner Kennlinie (sie entspricht einer 4 kV-Zenerdiode) benötigt das Magnetron M eine Stromspeisung.

Wie erwähnt, werden die Transistoren durch die Spannungsüberwachung am Emitterwiderstand Rref immer bei derselben Stromamplitude abgeschaltet. Hierdurch gelangt pro Periode immer dieselbe Energie in die Speicherspulen LP, LP'. (Bei T1' ist die Abschaltstromamplitude durch die Einschaltzeit von T1 bestimmt). Die transformierte Speicherinduktivität und die Streuinduktivität der Trafos TR, TR' ermöglichen einen Konstantstrompuls pro Periode und Endstufe E bzw. E'. Die überschüssige Energie wird über die Energierücklieferdioden DF bzw. DF' in CL zurückgespeist.

Die Bilder 3i und 3k veranschaulichen die Funktion der Magnetronspeisung: Die Spannung an den Hochspannungswicklungen LH, LH' ist im Leerlauf (Vorheizzeit, keine Energieaufnahme durch das Magnetron) etwa 8 kVss und im Normalbetrieb - begrenzt durch das Magnetron - ca. 4 kVss (Bild 3i).

In Abhängigkeit der Transistorleitzeit der Schalttransistoren T1, T1' ist der negative Anteil dieser Spannung unterschiedlich. Die Klemm- oder Gleichspannungsverdopplerschaltungen KL bzw. KL' bestehend aus CK1, CK2 und DK1, DK2 bewirken unipolare Anodenspannungspulse an den Dioden DK1 und DK2 mit konstanter Amplitude.

Die Sekundärwicklung des Transformators TR ist in ihrer Polarität zur Primärwicklung gegenüber der vom Übertrager TR' entgegengesetzt geschaltet. Durch diese Verschaltung wird die sequenziell verschachtelte Gegentaktklemmung erreicht.

Nach dem Abschalten beider Transistoren T1 und T1' erhält CK1 einen großen Teil der gespeicherten Energie des Trafos TR. Er wird nahgeladen. Der Rest der Energie geht in den Kondensator CF1, um später über die Energierücklieferdiode in DF wieder abgegeben zu werden (Spannung an der Hochspannungswicklung Bild 3i). Während dieser Zeit, es ist die Freilaufzeit tF, liegt die gleiche Spannung an der Hochspannungswicklung von Trafo TR' in entgegengesetzter Polarität an. Der während der vorher stattgefundenen Transistoreinschaltzeit tE nachgeladene Klemmkondensator CK2 liegt während dieser Zeitspanne (tF) über die jetzt leitende Diode DM2 an der Katode des Magnetrons M. In dieser Zeit wird der größte Teil der gespeicherten Energie des Trafos TR' und ein Teil der Energie des Klemmkondensators CK2 in das Magnetron M transferiert.

Nach Beendigung dieser Freilaufzeitphase befinden wir uns in der Phase der Energierücklieferung und etwas später in der Einschaltzeit (tDF + tE). In diesem Zeitabschnitt wird, wie vorher kurz erwähnt, der Klemmkondensator Cf2 im Durchflußbetrieb über die Diode DK2 nachgeladen. Der Kondendensator CK1 ist während dieses Zeitabschnittes über die leitende Diode DM1 mit der Katode des Magnetrons M verbunden und gibt die vorher gespeicherte Energie teilweise ab. Zusätzlich erhält das Magnetron M Energie aus dem Netz durch den jetzt stattfindenden Durchflußbetrieb. Diese wechselseitige Klemmung und Energieabgabe führt dazu, daß die Strompausen innerhalb des ca. 8 ms andauernden Paketes (Bild 3c) sehr kurz sind (Bild 3k).

Der Erfindung liegt die Erkenntnis zugrunde , daß jede Klemmschaltung KL, KL' für sich allein in der Lage ist, ohne Verschlechterung des Wirkungsgrades unipolare Stromimpulse mit für das Magnetron M maximal zulässiger Amplitude (dieser Wert liegt bei einem 1kW-Magnetron bei 1,5 A) unter Bereitstellung von 50 % der maximal abgebbaren Leistung zu liefern, wenn die andere Klemmschaltung nicht arbeitet, und daß beide Klemmschaltungen unabhängig voneinander mit einem gleich guten Wirkungsgrad wie beim gemeinsamen Arbeiten auch im Taktbetrieb betrieben werden können. Hiervon wird beim Schaltnetzteil gemäß der Erfindung Gebrauch gemacht, um die vom Magnetron M an das Gargut abgegebene Leistung mittels des Bedienteils zu regeln, indem je nach Leistungsbedarf für das Gargut beide Klemmschaltungen KL, KL' gemeinsam, eine davon ggf. getaktet, oder nur eine von ihnen, ggf. getaktet, vom Bedienteil angesteuert und betrieben werden. Dies ist dadurch verwirklicht, daß jede Klemmschaltung KL, KL' mit ihrem zugehörigen Transformator TR, TR' einer eigenen, von der anderen unabhängig ein- und ausschaltbaren Endstufe E, E' angehört. Die Ansteuerung vom Bedienteil her erfolgt über den zugehörigen Optokoppler O, O' und den Komparator 4.

Bei maximaler Leistungsabgabe an das Gargut arbeiten beide Klemmschaltungen KL, KL' bzw. Endstufen E, E' im Dauerbetrieb gemeinsam.

Soll die an das Gargut abgegebene Leistung weniger als die maximal vom Magnetron M lieferbare Leistung $P_{max}$ aber mehr als 50% von $P_{max}$ betragen, arbeitet nur eine der beiden Endstufen E, E' -beim Schaltnetzteil gemäß Bild 1 aus einem weiter unten noch erörterten Grund die Endstufe E- im Dauerbetrieb, und die andere (E') wird getaktet; z.B. für eine Gargutleistung von 75 % $P_{max}$ imEinsekundentakt.

Soll die Gargutleistung 50% oder weniger von $P_{max}$ betragen, wird eine der beiden Endstufen E, E' -im Beispiel gemäß Bild 1 die Endstufe E'- gänzlich abgeschaltet und nur die andere (E) ggf. getaktet betrieben; z.B. für eine Gargutleistung von 25 % $P_{max}$ im Einsekundentakt.

Der vorstehend angesprochene Grund besteht darin, daß die Endstufe E die die Versorgungen der Heizung und der Vorstufen mit übernimmt und demzufolge nicht abgeschaltet werden darf.

In den Bildern 4a bis 4d sind einige Dosierungsbeispiele in Form von Leistungs/Zeit-Diagrammen dargestellt.

Innerhalb der Gargutleistungs-Einstellung von 50 % bis 100 % wird das Magnetron M durchgehend beheizt. Hierdurch wird es äußerst gering beansprucht, was sich auf die Lebensdauer sehr positiv auswirkt. Aber auch beim Betrieb zwischen 5 % und 50 % der maximalen Gargut-Leistung wird - wie die Lebendauerkurve aussagt - das Magnetron M wegen des erlaubten Einsekundenrhythmusses wenig beansprucht. Auch der Einfluß der Anheizzeit ist gering, da die Pausen sehr kurz sind und das Magnetron M $_{sich\ nicht\ stark\ ab}$ -kühlt.

Bei sehr geringen Leistungen (5 % Leistung = 47,5 % Pause = 9 Sekunden) kann die kleine Anheizzeitverzögerung im Bedienteil leicht softwaremäßig erfaßt und berücksichtigt werden.

**Patentansprüche**

**1.** Mit Transformator (TR,TR') und elektronischem Schalter (T1, T1') versehenes Schaltnetzteil zum Betreiben eines Magnetrons (M), wobei das Schaltnetzteil im kombinierten Currentmode-, Durchfluß- und Sperrwandlerbetrieb zu arbeiten vermag und durch einen Resonanzkreis eine feste Freilaufzeit aufweist, und wobei die während der Durchflußzeit nicht entnommene Energie wieder in den Ladekondensator (CL) zurückgespeichert wird und für die impulsförmige Stromauskopplung zum Magnetron (M) zwei Klemmschaltungen (KL,KL') mit je einem eigenen zugehörigen Transformator (TR,TR') vorgesehen sind, die so gepolt sind, daß bei gemeinsamem Betrieb beider Klemmschaltungen (KL,KL') in der Durchflußphasenzeit die eine Klemmschaltung (KL) einen zugehörigen Klemmkondensator (CK1) auflädt, während die andere Klemmschaltung (KL') Energie an das Magnetron (M) abgibt, und dann in der darauffolgenden Sperrphasenzeit die vorgenannte eine Klemmschaltung (KL) Energie an das Magnetron (M) abgibt, während die andere Klemmschaltung (KL') einen zugehörigen Klemmkondensator (CK2) auflädt, **dadurch gekennzeichnet, daß** das Schaltnetzteil mit zwei gesonderten Endstufen (E,E') mit je einem eigenen elektronischen Schalter (T1 ,T1') versehen ist, von denen die eine den einen Transformator (TR) mit zugehöriger Klemmschaltung (KL) und die andere den anderen Transformator (TR') mit zugehöriger Klemmschaltung (KL') aufweist, **und daß** die beiden Endstufen (E,E') zur Dosierung der an das Magnetron (M) abgegebenen Leistung unabhängig voneinander ein- und abschaltbar sind.

2. Schaltnetzteil nach Anspruch 1, **dadurch gekennzeichnet,** daß beide Endstufen (E,E') von einer gemeinsamen Ansteuerschaltung (AN) ansteuerbar sind.

## Claims

1. Switching power supply unit, which is provided with transformer (TR, TR') and electronic switch (T1, T1'), for the operating of a magnetron (M), wherein the switching power supply unit is capable of functioning in combined current mode operation, discharge operation and isolating transformer operation and has, through a resonant circuit, a freewheel time, and wherein the energy not tapped off during the discharge time is stored back again in the charging capacitor (CL), and two clamping circuits (KL, KL') each with an own associated transformer (TR, TR') are provided for the pulse-shaped current decoupling relative to the magnetron (M), which are so poled that on joint operation of the two clamping circuits (KL, KL') in the discharge phase time the one clamping circuit (KL) charges an associated clamping capacitor (CK1) while the other clamping circuit (KL') delivers energy to the magnetron (M), and then in the isolating phase time following thereon the aforesaid one clamping circuit (KL) delivers energy to the magnetron (M) while the other clamping circuit (KL') charges an associated clamping capacitor (CK2), characterised thereby that the switching power supply unit is provided with two separate end stages (E, E') each with an own electronic switch (T1, T1'), of which one has the one transformer (TR1) with associated clamping circuit (KL) and the other has the other transformer (TR') with associated clamping circuit (KL'), and that the two end stages (E, E') are switchable on and off independently of one another for metering of the power delivered to the magnetron (M).

2. Switching power supply unit according to claim 1, characterised thereby that the two end stages (E, E') are drivable by a common driver circuit (AN).

## Revendications

1. Alimentation à découpage muni d'un transformateur (TR, TR') et d'un interrupteur (T1, T1') électronique destiné à faire fonctionner un magnétron (M), l'alimentation à découpage pouvant travailler en fonctionnement combiné en current-mode, en convertisseur de transmission et en convertisseur de blocage et comportant une durée fixe de fonctionnement en roue libre grâce à la présence d'un circuit résonant, l'énergie qui n'est pas prélevée pendant le temps de transmission, étant de nouveau emmagasinée en retour dans le condensateur (CL) de charge, et les deux circuits de blocage (KL, KL'), qui ont chacun leur propre transformateur (TR, TR') étant prévus pour le découplage impulsionnel du courant au magnétron (M), les circuits de blocage étant montés de sorte que, lorsque les deux circuits (KL, KL') de blocage fonctionnent en commun, un circuit (KL) de blocage charge un condensateur (CK1) de blocage associé pendant la phase de transmission, tandis que l'autre circuit (KL') de blocage fournit de l'énergie au magnétron (M), puis, le circuit de blocage (KL) indiqué précédemment fournit de l'énergie au magnétron (M) pendant la phase suivante de blocage, tandis que l'autre circuit (KL') de blocage charge un condensateur (CK2) de blocage associé, caractérisée en ce que l'alimentation à découpage est munie de deux étages (E,E') finals séparés, comportant chacun leur propre interrupteur (T1, T1') électronique, dont l'un comporte un transformateur (TR) auquel est associé le circuit (KL) de blocage, et dont l'autre comporte l'autre transformateur (TR') auquel est associé le circuit (KL') de blocage, et les deux étages (E, E') finals peuvent être branchés et débranchés, indépendamment l'un de l'autre, pour le dosage de la puissance fournie au magnétron (M).

2. Alimentation à découpage suivant la revendication 1, caractérisée en ce que les deux étages (E, E') finals peuvent être commandés par un circuit (AN) de commande commun.

Bild 1

## Bild 2

Ersatzschaltbild des Auskoppelkreises

a) Sperrwandler

$$\left| C_F{}' \right| = C_F \cdot \ddot{u}^2$$

$$\left| L_S{}' \right| = L_S \cdot \ddot{u}^2$$

b) Durchfluß

$$\left| L_S{}' \right| = L_S \cdot \ddot{u}^2$$

# Übersicht von den zeitlichen Strom- und Spannungsabläufen in Abhängigkeit der Netzspannung

### Bild 3a – e

## Bild 3g - k

g)
Kollektorspannung

h)
Kollektorstrom
Diodenstrom
Kondensatorstrom

l)
Spannung an der
Hochspannungswicklung

k)  $I_{CM1}$
    $I_{CM2}$
    $I_A$

Ströme durch die
Klemmkondensatoren
$C_{M1}$ und $C_{M2}$

Anodenstrom des
Magnetrons

Bild 4a

Bild 4b

Bild 4c

Bilder 4a, b und c

Dosierungsbeispiele für    a = 750 W
b = 500 W
c = 250 W Leistungsabgabe